# EUROPÄISCHE PATENTSCHRIFT

(11) **EP 0 490 355 B1**
(45) Veröffentlichungstag und Bekanntmachung des Hinweises auf die Patenterteilung: **01.06.1994**
(21) Anmeldenummer: 91121208.2
(22) Anmeldetag: 11.12.1991
(51) Int. Cl.: B23B 49/00, B25D 17/08

(54) **Bohrwerkzeug mit einem an diesem befestigten Anschlagring**
Drill with annular stop
Foret muni d'un anneau de butée

(30) Priorität: 13.12.1990 DE 4039835; 01.03.1991 DE 4106434
(43) Veröffentlichungstag der Anmeldung: 17.06.1992
(73) Patentinhaber: Hawera Probst GmbH + Co., 88212 Ravensburg (DE)
(72) Erfinder: Schwarz, Gerhard, W-7981 Blitzenreute (DE)
(74) Vertreter: Patentanwälte Eisele, Otten & Roth

(56) Entgegenhaltungen:
- EP-A- 0 171 830
- EP-A- 0 385 059

## Beschreibung

Die Erfindung betrifft ein Bohrwerkzeug mit einem an diesem befestigten Anschlagring zur Begrenzung der Bohrtiefe, nach dem Oberbegriff des Anspruchs 1.

### Stand der Technik:

Tiefenanschläge beim Bohren in Gestein sind in verschiedener Ausführung bekannt. Zum einen kann der axiale Weg des Spiralschafts im Bohrloch durch einen z. B. an der Bohrmaschine befestigten, jedoch verschiebbaren Tiefenanschlag begrenzt werden. Weiterhin sind Bohrwerkzeuge bekannt, die einen auf dem Bohrer axial verschiebbaren Ring aufweisen, der mittels einer Stellschraube am Bohrer fixiert werden kann. Es sind weiterhin Bohrwerkzeuge bekannt (DE-U 85 15 960), die einen als Anschlag dienenden zylindrischen Absatz mit größerem Durchmesser aufweisen, wobei Bohrer und Anschlag einstückig gefertigt sind. Bei diesen Bohrwerkzeugen ist der Anschlag nicht verschiebbar, d. h. er ist stets auf die gleiche Tiefe des Bohrlochs ausgelegt.

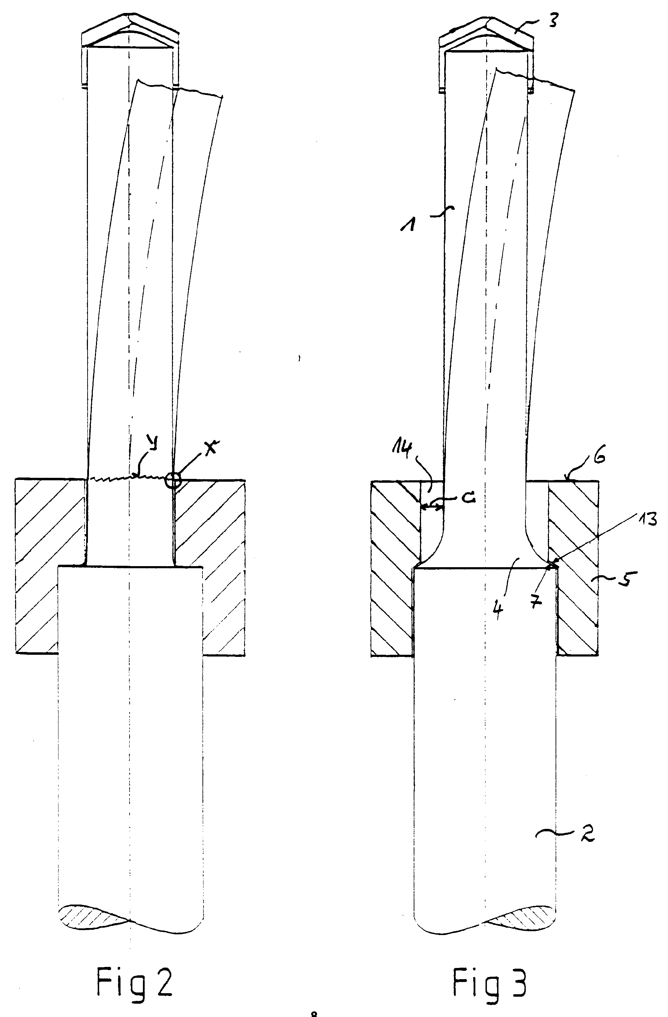

Gemäß der Darstellung in Fig. 2 der vorliegenden Anmeldung ist auch ein Bohrwerkzeug gemäß dem Oberbegriff des Anspruchs 1 bekannt, bei welchem ein Anschlagring mit abgesetztem Durchmesser sich auf einer Ringschulterfläche zwischen Spiralschaft und Zylinderschaft abstützt. Dabei kann der Anschlagring auf dem Zylinderschaft aufgelötet sein.

Derartige Bohrwerkzeuge werden dynamisch belastet, d. h. beim Eindringen in Gestein, welches ggf. mit einer Stahlarmierung versehen ist, wird der Spiralschaft einer dynamischen Biegung unterworfen, wie dies auch in Fig. 2 als gekrümmter Spiralschaft angedeutet ist. Da der Anschlagring den Spiralschaft vollständig umschließt, kommt es zu einer gewissen Kerbwirkung in dem Bereich, in welchem der Anschlag bohrerkopfseitig endet. Erst ab diesem Bereich kann sich der Spiralschaft ungehindert verbiegen. Solche Kerbspannungsspitzen können sich noch dadurch erhöhen, daß der Anschlag gegen das Bohrloch fährt, wobei eine zusätzliche Belastung eintritt. Es kommt demnach zum vorzeitigen Bruch des Spiralschafts im Bereich der stirnseitigen Anschlagfläche des Anschlagrings.

### Vorteile der Erfindung:

Das in Anspruch 1 definierte Bohrwerkzeug hat gegenüber den bekannten Werkzeugen den Vorteil, daß ein einfach herstellbarer Anschlagbohrer geschaffen wird, der eine deutlich verbesserte Bruchfestigkeit insbesondere bei dynamischer Belastung mit Biegemomenten aufweist.

Der Erfindung liegt der Kerngedanke zugrunde, daß der Anschlagring derart konzipiert und am Bohrwerkzeug angebracht sein muß, daß die Biegebeanspruchung des dynamisch belasteten Bauteils hiervon völlig unberührt bleibt. Vielmehr muß sich der Spiralschaft gegenüber dem Zylinderschaft des Bohrwerkzeugs ungehindert wie bei einem normalen Bohrwerkzeug einer ungehinderten Verbiegung unterziehen können, ohne daß durch den Anschlagring zusätzliche Spannungsspitzen auftreten. Demzufolge muß der Anschlagring mit seiner Befestigungszone derart am Bohrwerkzeug anliegen und hieran befestigt sein, daß dies ohne Beeinflussung auf das Biegeverhalten des Bohrwerkzeugs bleibt. Die Befestigung des Anschlagrings wird deshalb auf einen völlig unkritischen Durchmesserbereich des Bohrwerkzeugs verlegt, wobei insbesondere die bohrerkopfseitige, stirnseitige Anschlagfläche des Anschlagrings axial getrennt von der Anschlagfläche des Anschlagrings gegenüber dem Bohrwerkzeug angeordnet ist.

Mit dem erfindungsgemäßen Bohrwerkzeug wird insbesondere erreicht, daß keinerlei Kerbwirkung, hervorgerufen durch den Anschlagring, auf den Spiralschaft oder auch auf den Zylinderschaft einwirkt. Die auf den Anschlagring auftretenden Axialkräfte werden vielmehr an einer unkritischen Stelle in den Zylinderschaft eingeleitet. Demzufolge treten auch bei extremer Schlagbeanspruchung und sich einstellenden Biegemomenten bei einseitiger schräger Belastung auf den Anschlagring aufgrund schräger Bohrungen keinerlei Brüche durch Spannungsspitzen auf.

Durch die in den Unteransprüchen aufgeführten Maßnahmen sind vorteilhafte und zweckmäßige Weiterbildungen des im Hauptanspruch angegebenen Bohrwerkzeugs möglich.

Gemäß der Ausbildung des Bohrwerkzeugs im Anspruch 2 wird der Durchmessersprung im Anschlagring wesentlich kleiner ausgeführt, als der Durchmessersprung vom Spiralschaft zum Zylinderschaft. Hierdurch ergibt sich ein ausreichend breiter Ringspalt, der eine ungehinderte Bewegungsfreiheit des Spiralschafts insbesondere bei einer Biegebeanspruchung zuläßt.

Durch axiale Verlagerung der stirnseitigen Anschlagfläche des Anschlagrings und der Abstützfläche zwischen Anschlagring und Bohrwerkzeug werden kritische Belastungszonen am Bohrwerkzeug axial getrennt. Diese axiale Trennung soll wenigstens einen Wert aufweisen, der im Bereich der axialen Länge der Übergangszone des Durchmessersprungs zwischen Spiralschaft und Zylinderschaft liegt. In vorteilhafter Weiterbildung der Erfindung ist diese axiale Länge ungefähr vom Betrag her gleich groß oder größer wie der Betrag des Spiralschaftdurchmessers.

Eine Weiterbildung der Erfindung sieht weiterhin vor, daß der den Zylinderschaft umgebende Längsabschnitt des Anschlagrings mit größerem Innendurchmesser mit dem Zylinderschaft verlötet ist, während der den Spiralschaft bzw. den Fuß des Spiralschafts umgebende Längsabschnitt des Anschlagrings einen Ringspalt zur völligen Bewegungsfreiheit bei einer Biegebeanspruchung des Spiralschafts bildet. Dabei wird die kegelförmige Abstützfläche im Anschlagring durch den Durchmessersprung der Innenbohrungen gebildet. Diese Abstützfläche soll verhältnismäßig schmal ausgeführt sein, d. h. die Abstützung an der Ringschulterfläche der Übergangszone zwischen Spiralschaft und Zylinderschaft des Bohrwerkzeugs wird sehr schmal ausgeführt.

Durch den sich hieraus ergebenden großen Ringspalt zwischen dem Anschlagring und dem Spiralschaft kann die Übergangszone zwischen Spiralschaft und Zylinderschaft mit einem großen Krümmungsradius versehen werden, wodurch das Bohrwerkzeug sehr unempfindlich gegen dynamische Biegebeanspruchung wird. Insbesondere ist diese sonst kritische Zone entfernt von der stirnseitigen Anschlagfläche des Anschlagrings.

Weitere Einzelheiten und Vorteile eines Ausführungsbeispiels sind in der Zeichnung dargestellt und in der nachfolgenden Beschreibung näher erläutert. Es zeigen
- Fig. 1: eine Seitenansicht des erfindungsgemäßen Bohrwerkzeugs mit Anschlagring im Längsschnitt,
- Fig. 2: eine Anordnung eines Bohrwerkzeugs mit Anschlagring nach dem Stand der Technik und
- Fig. 3: die Darstellung nach Fig. 1 mit Biegebeanspruchung des Bohrwerkzeugs.

### Beschreibung des Ausführungsbeispiels der Erfindung:

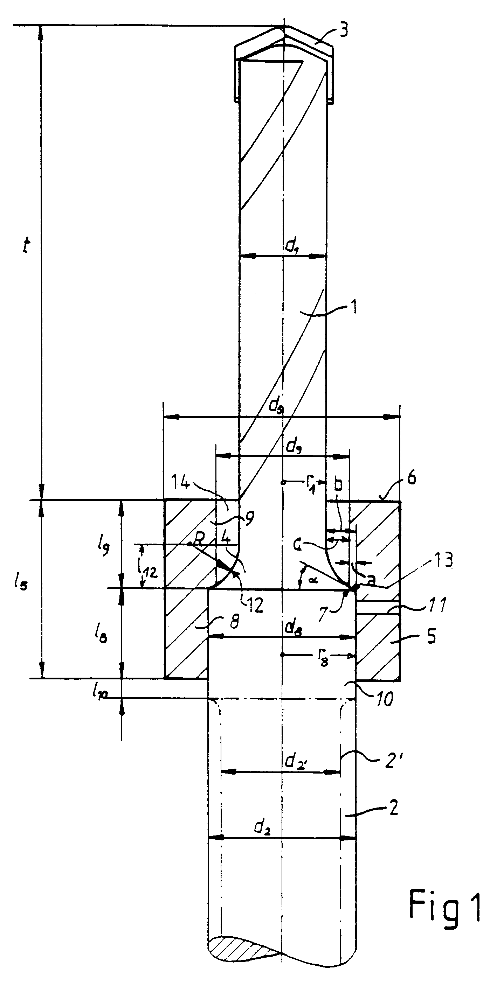

Das in der Fig. 1 und 3 dargestellte Bohrwerkzeug besteht aus einem Spiralschaft 1 und einem nur teilweise dargestellten zylindrischen Zylinderschaft 2. An der Spitze des Spiralschafts 1 ist eine Hartmetallschneide 3 zu Bildung des Bohrkopfes eingesetzt. An seinem Fuß 4 vergrößert sich der Durchmesser d₁ des Spiralschafts 1 über einen großen Krümmungsradius R allmählich auf den Außendurchmesser d₂ des Zylinderschafts. Ein Anschlagring 5 mit der Länge l₅ und dem Außendurchmesser d₅, dessen die Bohrtiefe t bestimmende stirnseitige Anschlagfläche mit 6 bezeichnet ist, erstreckt sich über die Übergangszone des Spiralschaftfußes 4 zum Zylinderschaft 2 und ist auf etwa halber Länge l₈ im Bereich des Längsabschnitts 8 mit dem Zylinderschaft 2 über eine Hartlötung verbunden. Die Verbindung des Abschnitts 8 zum Zylinderschaft 2 kann auch als Preßverbindung oder Schrumpfverbindung ausgeführt sein.

Der vordere Längsabschnitt 9 des Anschlagrings 5 mit der Länge l₉ umschließt den Spiralschaftfuß 4 des Spiralschafts 1 und bestimmt die Anschlagtiefe t. Die Länge l₉ des Abschnitts 9 kann dabei auch kürzer als die Länge l₈ ausgeführt sein, sie sollte jedoch nicht kürzer als die Länge l₁₂ sein, was der axialen Länge der Übergangszone der radienförmigen Ringschulterfläche 12 entspricht.

Der vordere Längsabschnitt 9 des Anschlagrings 5 hat einen kleineren Innendurchmesser d₉ als der auf den Zylinderschaft 2 aufgesteckte und aufgelötete Längsabschnitt 8 mit dem Innendurchmesser d₈. Hierdurch ergibt sich eine innenkegelförmige Abstützfläche 13, die auf dem äußeren Rand der Ringschulterfläche 12 des Spiralschaftfußes 4 auf einer Abstützschulter 7 aufliegt. Die Innenkegelfläche der Abstützfläche 13 an dem Anschlagring 5 ist demnach durch den Innendurchmessersprung d₈ / d₉ gebildet.

Die radiale Breite a der Abstützschulter 7 am Spiralschaftfuß 4 bzw. die Abstützfläche 13 des Anschlagrings 5 ist sehr schmal ausgeführt und beträgt a ungefähr (1/4 bis 1/2) b, wobei b = r₈ - r₁ ist. (r₈ = d₈/2; r₁ = d₁/2). Der Kegelwinkel α der Abstützschulter 7 beträgt ca. 30°, die Abstützschulter 7 wird ebenfalls in die Lötverbindung einbezogen.

Der Schaftdurchmesser d₂ kann sich nach einem Übergangsbereich 10 mit der Länge l₁₀ wieder verjüngen (d_{2′}) oder auch noch erweitern. In der Fig. 1 ist eine Verjüngung auf den Durchmesser d_{2′} gestrichelt dargestellt. Auf jedenfall soll der Befestigungsabschnitt 8 nicht mit dem Durchmessersprung d₈ → d_{2′} überlappen, um Spannungsspitzen zu vermeiden.

Der Anschlagring 5 kann eine Bohrung 11 zur Zuführung von Lötmaterial zur Verlötung des Längsabschnitts 8 aufweisen.

Maßgeblich für die gute dynamische Belastbarkeit des Bohrwerkzeugs durch auftretende Biegemomente ist der durch den kleinen Durchmessersprung d₈ / d₉ gebildete Ringspalt 14 im Bereich des Längsabschnitts 9 mit der Ringspaltbreite c. Dieser Ringspalt ermöglicht einen ungehinderten Übergangsradius R im Bereich des Spiralschaftfußes 4. Wie aus Fig. 3 ersichtlich, kann sich der Spiralschaft 1 hierdurch ungehindert einer dynamischen Durchbiegung unterziehen, ohne daß es zu Spannungsspitzen zwischen dem Anschlag 5 und dem Spiralschaft 1 kommt. Der in der Fig. 2 beim Stand der Technik angegebene kritische Bereich X mit der entsprechenden Bruchstelle Y im Bereich der bohrerkopfseitigen Stirnfläche des dort dargestellten Anschlagrings entfällt vollkommen. Vielmehr ist diese kritische Stelle "X" dadurch bei der vorliegenden Erfindung entfallen, in dem die Verbindung des Anschlagrings 5 mit dem Bohrwerkzeug auf die schmale kegelförmige Fläche 7, 13 mit der Breite a beschränkt ist. Die Befestigung des Anschlagrings 5 liegt demnach auf einen unkritischen Durchmesserbereich, wobei der Ringspalt 14 eine ungehinderte Bewegungsmöglichkeit des Spiralschafts bei einer Wechselbiegebeanspruchung zuläßt. Kritische Punkte und Laststellen werden demnach bei der vorliegenden Erfindung optimal auseinandergezogen und verteilt.

Der Durchmesser d₉ wird so groß gewählt, daß sich eine ausreichend breite innenkegelförmige Abstützfläche 13 im Anschlagring 5 ergibt, die auf der radial außen liegenden Abstützschulter 7 der Ringschulterfläche 12 aufliegt. Durch die zusätzliche Lötverbindung im Längsabschnitt 8 wird der Anschlagring ausreichend stark gehalten, so daß die Breite a verhältnismäßig klein gehalten werden kann. Maßgeblich ist der freie und optimale Übergang der radienförmigen Ringschulterfläche 12 zur Vermeidung von Spannungsspitzen. Die Länge l₉ des oberen Längsabschnitts 9 des Anschlagrings 5 sollte mindestens den axialen Längsabschnitt l₁₂ überdecken, der für die Übergangszone der Ringschulterfläche 12 benötigt wird, d. h. der durch den Übergangsbereich d₈ / d₁ gebildet wird.

## Patentansprüche

1. Bohrwerkzeug mit einem an diesem befestigten Anschlagring (5) mit bohrkopfseitiger Anschlagfläche (6) zur Begrenzung der Bohrtiefe (t), wobei sich der Anschlagring (5) über eine Abstützfläche (13) am Bohrwerkzeug abstützt, dadurch gekennzeichnet, daß der Spiralschaft (1) über eine Spannungsspitzen vermeidende Ringschulterfläche (12) in den Zylinderschaft (2) übergeht, wobei sich der Anschlagring (5) im radial äußeren Bereich der Ringschulterfläche (12) auf einer Abstützschulter bzw. -fläche (7, 13) abstützt und wobei zwischen Spiralschaft (1) und Anschlagring (5) ein die Ringschulterfläche (12) freilassender Ringspalt (14) vorgesehen ist, dessen axiale Länge (l₉) wenigstens so groß ist, wie die axiale Länge (l₁₂) der durch die Ringschulter (12) gebildeten Übergangszone des Durchmessersprungs zwischen Spiralschaft (1) und Zylinderschaft (2).

2. Bohrwerkzeug nach Anspruch 1, dadurch gekennzeichnet, daß der Durchmessersprung (d₈ / d₉) im Anschlagring (5) zur Bildung der innenkegelförmigen Abstützfläche (13) wesentlich kleiner ist, als der Durchmessersprung (d₂ / d₁) vom Zylinderschaft (2) zum Spiralschaft (1), der im Bereich der Ringschulterfläche (12) mit einem Übergangsradius (R) versehen ist, wobei bohrkopfseitig ein Ringspalt (14) für eine Bohrerdurchbiegung vorgesehen ist.

3. Bohrwerkzeug nach Anspruch 1 oder 2, dadurch gekennzeichnet, daß die bohrkopfseitige Anschlagfläche (6) des Anschlagrings (5) in einem Abstand (l₉) von der Abstützschulter (7) entfernt angeordnet ist, der vom Betrag her etwa dem Durchmesser (d₁) des Spiralschafts entspricht (l₉ ∼ d₁).

4. Bohrwerkzeug nach Anspruch 1, 2 oder 3, dadurch gekennzeichnet, daß der Anschlagring (5) einen mit dem Zylinderschaft (2) verlöteten Längsabschnitt (8) (l₈) mit größerem Innendurchmesser (d₈) und einen, den Spiralschaftfuß (4) des Spiralschafts (1) umgebenden Längsabschnitt (9) (l₉) mit kleinerem Innendurchmesser (d₉) aufweist und daß die in der Übergangszone gebildete Ringschulterfläche (12) eine radial außen liegende kegelförmige Abstützschulter (7) aufweist, die mit einer innenkegelförmigen Abstützfläche 13 des Anschlagrings (5) zusammenwirkt.

5. Bohrwerkzeug nach einem oder mehreren der vorhergehenden Ansprüche, dadurch gekennzeichnet, daß die Abstützfläche (13) des Anschlagrings (5) etwa in deren Längsmitte (l₈ ∼ l₉) oder im vorderen Drittel (l₉ ∼ 1/3 l₈) des Anschlagrings (5) angeordnet ist.

6. Bohrwerkzeug nach einem oder mehreren der vorhergehenden Ansprüche, dadurch gekennzeichnet, daß die Breite (a) der Abstützfläche (13) des Anschlagrings (5) etwa 1/4 bis 1/2 der Differenz (b) der Halbmesser (r₈ bzw. r₂) des Zylinderschafts (2) und (r₁) des Spiralschafts (1) beträgt.

7. Bohrwerkzeug nach einem oder mehreren der vorhergehenden Ansprüche, dadurch gekennzeichnet, daß die Verbindungsfläche des Längsabschnitts (8) des Anschlagrings (5) zum Zylinderschaft (2) auf dem maximalen Bohrerschaftdurchmesser (d₂) liegt.

8. Bohrwerkzeug nach einem oder mehreren der vorhergehenden Ansprüche, dadurch gekennzeichnet, daß der Zylinderschaftdurchmesser (d₂) nach dem Längsabschnitt (8) auf eine Einspannschaftgröße (d_{2′}) verjüngt ist.

9. Bohrwerkzeug nach Anspruch 8, dadurch gekennzeichnet, daß ein Übergangsabschnitt (10) mit der Länge (l₁₀) zwischen dem Ende des Anschlagrings (5) und dem sich verjüngenden Zylinderschaft (2′) vorgesehen ist.

10. Bohrwerkzeug nach einem oder mehreren der vorhergehenden Ansprüche, dadurch gekennzeichnet, daß die kegelförmige Abstützschulter (7) bzw. die zugehörige Abstützfläche (13) einen Kegelwinkel (α ∼ 30°) aufweist.

## Claims

1. Drilling tool with a stop ring (5) attached thereto with a stop face (6) adjacent the drilling head for limiting the drilling depth (t), the stop ring (5) being supported on the drilling tool by way of a support surface (13), characterised in that the spiral shaft (1) passes into the cylinder shaft (2) by way of an annular shoulder surface (12) avoiding peak stresses, the stop ring (5) being supported in the radially outer region of the annular shoulder surface (12) on a support shoulder or surface (7, 13) and an annular gap (14) leaving the annular shoulder surface (12) free being provided between the spiral shaft (1) and stop ring (5), the axial length (l₉ ) of which annular gap (14) is at least as great as the axial length (l₁₂) of the transition zone of the diameter jump between the spiral shaft (1) and cylinder shaft (2) formed by the annular shoulder (12).

2. Drilling tool according to Claim 1, characterised in that the diameter jump (d₈ /d₉ ) in the stop ring (5) for forming the support surface (13) in the shape of an internal taper is substantially smaller than the diameter jump (d₂/d₁) from the cylinder shaft (2) to the spiral shaft (1), which in the region of the annular shoulder surface (12) is provided with a transition radius (R), adjacent the drill head an annular gap (14) being provided for deflection of the drill.

3. Drilling tool according to Claim 1 or 2, characterised in that the stop face (6) of the stop ring (5) adjacent the drill head is disposed at a distance (l₉ ) from the support shoulder (7), which as regards the amount corresponds approximately to the diameter (d₁ ) of the spiral shaft (l₉ ∼ d₁).

4. Drilling tool according to Claim 1, 2 or 3, characterised in that the stop ring (5) comprises a longitudinal section (8) (l₈ ) soldered to the cylinder shaft (2), with a larger inner diameter (d ₈) and a longitudinal section (9) (l₉ ) surrounding the spiral shaft foot (4) of the spiral shaft (1), with a smaller inner diameter (d ₉) and that the annular shoulder surface (12) formed in the transition zone comprises a tapered support shoulder (7) lying radially on the outside, which cooperates with a support surface (13) in the shape of an internal taper of the stop ring (5).

5. Drilling tool according to one or more of the preceding Claims, characterised in that the support surface (13) of the stop ring (5) is located approximately in its longitudinal centre (l₈ ∼ l₉ ) or in the front third (l₉ ∼ 1/3 l₈) of the stop ring (5).

6. Drilling tool according to one or more of the preceding Claims, characterised in that the width (a) of the support surface (13) of the stop ring (5) amounts to approximately 1/4 to 1/2 of the difference (b) between the radius (r₈ or r₂) of the cylinder shaft (2) and (r₁) of the spiral shaft (1).

7. Drilling tool according to one or more of the preceding Claims, characterised in that the connecting surface of the longitudinal section (8) of the stop ring (5) to the cylinder shaft (2) lies on the maximum drill shaft diameter (d₂).

8. Drilling tool according to one or more of the preceding Claims, characterised in that after the longitudinal section (8), the cylinder shaft diameter (d₂ ) is tapered to a chucking shank size (d_{2′}).

9. Drilling tool according to Claim 8, characterised in that a transition section (10) with the length (l₁₀ ) is provided between the end of the stop ring (5) and the tapering cylinder shaft (2′).

10. Drilling tool according to one or more of the preceding Claims, characterised in that the tapered support shoulder (7) or the associated support surface (13) has a cone angle (α ∼ 30°).

## Revendications

1. Outil de forage comportant une bague de butée (5) fixée à celui-ci, présentant une surface de butée (6) du côté de la tête de forage pour limiter la profondeur de forage (t), la bague de butée (5) s'appuyant sur l'outil de forage par l'intermédiaire d'une surface d'appui (13),
caractérisé en ce que l'arbre en spirale (1) se convertit en l'arbre cylindrique (2) par l'intermédiaire d'une surface d'épaulement annulaire (12) évitant des pointes de contrainte, la bague de butée (5) s'appuyant dans la zone radialement externe de la surface d'épaulement annulaire (12) sur une surface ou un épaulement d'appui (7,13) et, entre l'arbre en spirale (1) et la bague de butée (5), étant prévue une fente annulaire (14) laissant libre la surface d'épaulement annulaire (12), dont la longueur axiale (l₉) est au moins égale à la longueur axiale (l₁₂) de la zone de transition, formée par l'épaulement annulaire (12), du saut de diamètre entre l'arbre en spirale (1) et l'arbre cylindrique (2).

2. Outil de forage selon la revendication 1,
caractérisé en ce que le saut de diamètre (d₈/d₉) dans la bague de butée (5) pour former la surface d'appui en forme de cône intérieur (13) est bien plus petit que le saut de diamètre (d₂/d₁) de l'arbre cylindrique (2) à l'arbre en spirale (1), qui présente, dans la zone de la surface d'épaulement annulaire (12), un rayon de transition (R), une fente annulaire (14) étant prévue, du côté de la tête de forage, pour une flexion de l'outil de forage.

3. Outil de forage selon la revendication 1 ou 2,
caractérisé en ce que la surface de butée (6), du côté de la tête de forage, de la bague de butée (5) est éloignée de l'épaulement d'appui (7) d'une distance (l₉), dont la valeur correspond à peu près au diamètre (d₁) de l'arbre en spirale (l₉ ≃ d₁)

4. Outil de forage selon la revendication 1, 2 ou 3,
caractérisé en ce que la bague de butée (5) présente un tronçon longitudinal (8) (l₈) brasé à l'arbre cylindrique (2) ayant un plus grand diamètre interne (d₈) et un tronçon longitudinal (9) (l₉) entourant le pied (4) de l'arbre en spirale (1) ayant un plus petit diamètre interne (d₉), et en ce que la surface d'épaulement annulaire (12) formée dans la zone de transition présente un épaulement d'appui (7) en forme de cône s'étendant radialement vers l'extérieur, qui coopère avec une surface d'appui (13) en forme de cône intérieur de la bague de butée (5).

5. Outil de forage selon une ou plusieurs des revendications précédentes,
caractérisé en ce que la surface d'appui (13) de la bague de butée (5) est agencée environ au niveau de son centre longitudinal (l₈ ≃ l₉) ou dans le tiers avant (l₉ ≃ 1/3 l₈) de la bague de butée (5).

6. Outil de forage selon une ou plusieurs des revendications précédentes,
caractérisé en ce que la largeur (a) de la surface d'appui (13) de la bague de butée (5) vaut environ 1/4 à 1/2 de la différence (b) du rayon (r₈ ou r₂) de l'arbre cylindrique (2) et (r₁) de l'arbre en spirale (1).

7. Outil de forage selon une ou plusieurs des revendications précédentes,
caractérisé en ce que la surface de liaison du tronçon longitudinal (8) de la bague de butée (5) à l'arbre cylindrique (2) correspond au diamètre maximal (d₂) de l'arbre de l'outil de forage.

8. Outil de forage selon une ou plusieurs des revendications précédentes,
caractérisé en ce que le diamètre (d₂) de l'arbre cylindrique, après le tronçon longitudinal (8), est réduit au diamètre (d_{2′}) de l'arbre de fixation.

9. Outil de forage selon la revendication 8, caractérisé en ce qu'un tronçon de transition (10) de longueur (l₁₀) est prévu entre l'extrémité de la bague de butée (5) et l'arbre cylindrique (2′) qui s'amincit.

10. Outil de forage selon une ou plusieurs des revendications précédentes, caractérisé en ce que l'épaulement d'appui conique (7) ou la surface d'appui correspondante (13) présente un angle de cône (α ≃ 30°).
